# EUROPEAN PATENT APPLICATION

(11) **EP 2 523 127 A1**
(43) Date of publication of application: **14.11.2012**
(21) Application number: 12166077.3
(22) Date of filing: 27.04.2012
(51) Int. Cl.: G06F 17/30

(54) **Systems and methods for updating a database and handling interruptions**

(30) Priority: 09.05.2011 US 201113103710
(71) Applicant: Honeywell International Inc., Morristown, NJ 07962-2245 (US)
(72) Inventor: Baleedpalli, Raghav, Morristown, NJ New Jersey 07962-2245 (US); Hamilton, Douglas E., Morristown, NJ New Jersey 07962-2245 (US); Nutaro, Joseph, Morristown, NJ New Jersey 07962-2245 (US); Iyer, Vijayshankaran Ramamoorthy, Morristown, NJ New Jersey 07962-2245 (US); Pothula, Phani Ammi Raju, Morristown, NJ New Jersey 07962-2245 (US); Chennupati, Ravi Teja, Morristown, NJ New Jersey 07962-2245 (US)
(74) Representative: Houghton, Mark Phillip

(57) **Abstract**

A system and method for updating a database by a data loader management unit (DLMU) is provided. The method may include, but is not limited to, determining if a partial database download is stored in a memory of the DLMU, determining, if a version of the partial database download matches a version of the database stored on a database upgrade server, initiating, if the version associated with the partial database download matches the version of the database store on the database upgrade server, a download session to resume the download of the version of the database from the database upgrade server, and initiating, if the version associated with the partial database download does not match the version of the database store on the database upgrade server, a download session to being downloading the version of the database from the database upgrade server.

## Description

### TECHNICAL FIELD

The following relates to database systems and methods for operating the same, and more particularly relates to systems and updating a database and handling interruptions.

### BACKGROUND

Current aircraft typically include a flight management system. Flight managements systems are generally used to assist a pilot in piloting the aircraft. For example, flight management systems typically have access to a navigational database, which can be used by the flight management system to guide the aircraft along a desired flight path. Navigational databases for aircraft can be updated as often as every two or four weeks. The aircraft operator obtains the updates from the data base suppler. However, in current aircraft, the pilot or other maintenance personnel have to manually load the updated navigational database onto each aircraft each time the database is updated.

### SUMMARY

A computer implemented method for updating a database stored in a first memory by a data loader management unit having a memory is provided. The method may include, but is not limited to determining if a partial database download is stored in the memory of the data loader management unit, determining, if the partial database download is stored in the memory of the data loader management unit, if a version associated with the partial database download matches a most current version of the database stored on a database upgrade server, initiating, if the version associated with the partial database download matches the most current version of the database store on the database upgrade server, a download session to resume the download of the most current version of the database from the database upgrade server, and initiating, if the version associated with the partial database download does not match the most current version of the database store on the database upgrade server, a download session to being downloading the most current version of the database from the database upgrade server.

A system for updating a database stored in a first memory is further provided. The system may include, but is not limited to a communications system configured to communicate with a database upgrade server and a data loader management unit, communicatively connected to the communications system. The data loader management unit may include, but is not limited to a memory a processor. In one embodiment, for example, the processor may determine if a partial database download is stored in the memory of the data loader management unit, determine, if the partial database download is stored in the memory of the data loader management unit, if a version associated with the partial database download matches a most current version of the database stored on the database upgrade server, initiate, if the version associated with the partial database download matches the most current version of the database store on the database upgrade server, a download session to resume the download of the most current version of the database from the database upgrade server, and initiate, if the version associated with the partial database download does not match the most current version of the database store on the database upgrade server, a download session to being downloading the most current version of the database from the database upgrade server.

A computer implemented method for updating a navigational database on an aircraft is further provided. The method may include, but is not limited to determining if a partial database download is stored in a memory of a data loader management unit, determining, if the partial database download is stored in the memory of the data loader management unit, if a version associated with the partial database download matches a most current version of the database stored on a database upgrade server, initiating, if the version associated with the partial database download matches the most current version of the database store on the database upgrade server, a download session to resume the download of the most current version of the database from the database upgrade server, deleting, if the version associated with the partial database download does not match the most current version of the database store on the database upgrade server, the partial database download and initiating a download session to being downloading the most current version of the database from the database upgrade server.

### DESCRIPTION OF THE DRAWING FIGURES

Exemplary embodiments will hereinafter be described in conjunction with the following drawing figures, wherein like numerals denote like elements, and

FIG. 1 is a block diagram of an exemplary system in accordance with an embodiment;

FIG. 2 is a flow chart illustrating operation of an exemplary system in accordance with an embodiment.

### DETAILED DESCRIPTION

According to various exemplary embodiments, systems and methods are provided to automatically update a database and to handle various interrupt situations. An exemplary system utilizes a data loader management unit to monitor the progress of the download and handle interrupt situations, as discussed in greater detail below.

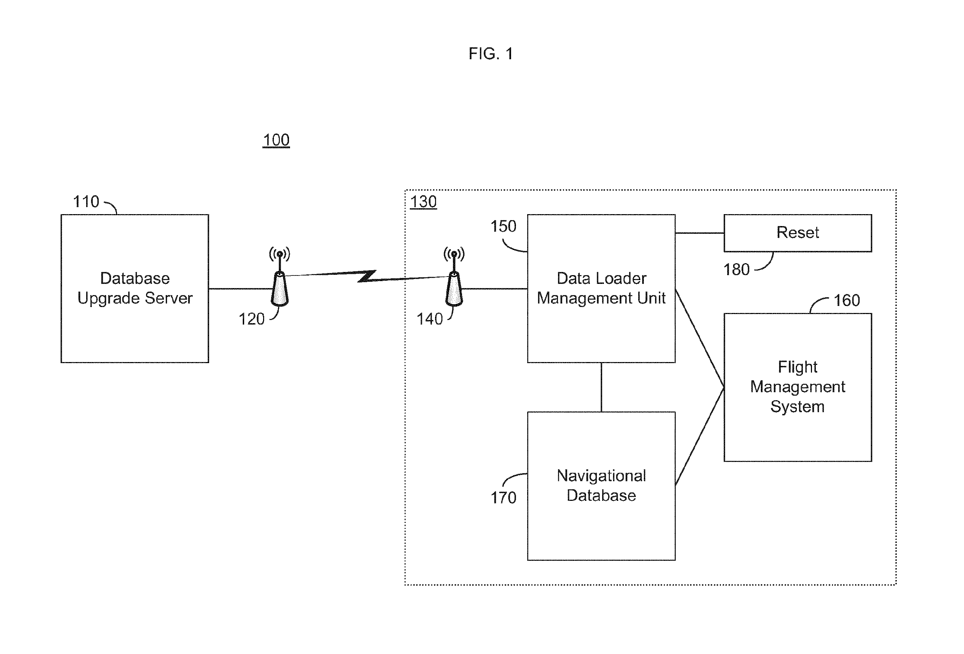

FIG. 1 is an exemplary system 100 for downloading a database from a database upgrade server 110. The following description illustrates an embodiment of the system 100 in the context of a vehicle 130, and more particularly an aircraft 130 having a navigational database 170. However, in other embodiments system 100 may be implemented to update a database or any other data file in any other type of vehicle, such as a spacecraft, watercraft, or any terrestrial vehicle. Further, in other embodiments, the system 100 may be used to download a database or any other file type to any device which may be subject to costly, limited or intermittent access to a database upgrade server.

The database upgrade server 110 could include any combination of hardware, software and firmware. The database upgrade server 110 also includes a storage device (not illustrated). The storage device stores the most current version of the database. In other embodiments the storage device can also store one or more older versions of the database or one or more updates to the database.

The database upgrade server 110 is connected to a wireless transceiver 120 capable of transmitting the database to the aircraft 130. In other embodiments, the transceiver 120 may also communicate, for example, by direct wire, sonic, light, or ground waves. The aircraft 130 has a corresponding wireless transceiver 140 capable of receiving the transmission. Any type of wireless communication may be used, including, but not limited to, Wi-Fi, any cellular technologies (3G, 4G, LTE, etc), satellite based communications, or any combination there of.

As discussed above, the aircraft 130 includes a navigational database 170. The navigational database 170 can be stored in any sort of memory (not illustrated) on the aircraft 130. The navigational database 170 can be used by a fight management system (FMS) 160 to assist in the management of a flight. FMSs are used in modern aircraft to reduce the burden on pilots. FMSs are capable of assisting the pilot in a wide variety of in flight tasks. For example, the FMS 160 may be connected to a global positioning system (GPS) (not illustrated) to assist the pilot in in-flight navigation. For example, the FMS can use a GPS and the navigational database 170 to guide the aircraft 130 along a flight route. The FMS 160 may be implemented using any combination of hardware, software and firmware. For example, the FMS 160 may use a processor (not illustrated) and may be connected to various sensors, such as a GPS and/or an inertial navigation system (INS) (not illustrated) and the navigational database 170 to guide the aircraft along the flight plan.

The aircraft 130 also includes a data loader management unit (DLMU) 150. In one embodiment, for example, the DLMU 150 is communicatively connected between the wireless transceiver 140 and the FMS 160. The DLMU may also be communicatively connected to the navigational database 170, as discussed in further detail below. The DLMU 150 manages the download of the updated database from the database upgrade server 110 and stores any partial downloads of the database. In one embodiment, for example, the DLMU 150 includes a permanent storage device, such as a hard drive or any other type of non-volatile memory. In other embodiments, the DLMU 150 may have a removable storage unit (not illustrated) for a non-volatile memory, such as a SD card. The DLMU may include any combination of hardware, software and firmware. In one embodiment, for example, the DLMU 150 also includes a reset interface 180. The reset interface 180 could allow a user, crew member or other maintenance personnel to manually reset the DLMU 150, causing the DLMU 150 to delete any partial database download and to restart a download session as discussed in further detail below. The DLMU function can be included within other hardware or software functions or may include other hardware and software functions such as the transceiver 140 in aircraft 130.

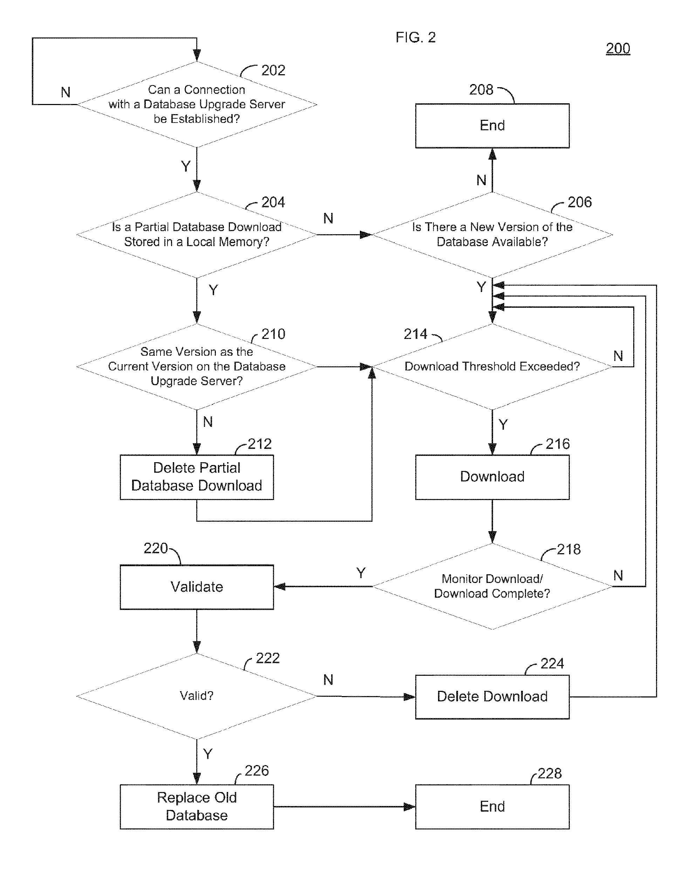

FIG. 2 is a flow diagram illustrating an exemplary method 200 for updating a database in accordance with an embodiment. The exemplary method 200 is designed to handle multiple different interrupt scenarios. In the context of an aircraft or watercraft, for example, the vehicle could be parked and shut down without power for months at a time. As discussed above, navigational databases are often updated every two weeks. Accordingly, if the vehicle was in the middle of downloading a database update at the time, the vehicle, upon being powered up again, would not necessarily want to continue with the existing, possibly outdated, download.

In the context of an aircraft, there are multiple possible interrupt scenarios. For example, an aircraft may be powered down mid download and powered up within the same navigational database cycle. The aircraft could also be powered down mid download and powered up in a new navigational database cycle. The aircraft's connection to the database upgrade server 110 may be lost multiple times as the plane taxis or takes off. In other instances the quality of the connection may be so poor to that a download session may not be warranted, as discussed in further detail below.

After the aircraft 130 is powered up, the DLMU 150 attempts to establish a connection to the database upgrade server 110. (Step 202). If at any time the connection between the aircraft 130 and database upgrade server 110 is lost, the process returns to Step 202 and attempts to reestablish a connection. As discussed above, the DLMU 150 can connect to the database upgrade server by using a transceiver 140 on the aircraft 130. If no connection can be established, the DLMU 150 can periodically reattempt to establish a connection.

If a connection can be established, the DLMU 150 then determines if a partial database download is stored in a local memory. (Step 204). The partial database download could be stored within the DLMU 150 or in any other memory on the aircraft 130. If there is no partial database download, the DLMU 150 communicates with the database upgrade server 110 to determine if there is a new version of the navigational database on the database upgrade server 110. (Step 206). In one embodiment, for example, a version code may be associated with the navigational database 170 stored on the aircraft 130 and on the database upgrade server 110 Accordingly, in the exemplary embodiment, the DLMU may determine if the version code associated with the navigational database 170 matches a version code associated with the most current database version stored on the database upgrade server 110. If the navigational database 170 is the same database as the database stored on the database upgrade server 110, the database update process ends (Step 208). If the navigational database 170 is different than the database stored on the database upgrade server 110, the DLMU may determine if a download threshold has been exceeded (Step 214), which is discussed in further detail below.

If there is a partial database download stored in the DLMU 150, or in any other memory, the DLMU 150 determines if a version associated with the partial database download matches a most current version of the database stored in the database upgrade server 110. (Step 210). If the version of the partial database download matches the version on the database upgrade server, the DLMU 150 may determine if a download threshold has been exceeded (Step 214), which is discussed in further detail below. If by verifying a date or cycle number or name associated with the databases, the version associated with the partial database download does not match the version associated with the database on the database upgrade server 110, the DLMU 150 may delete the partial database download. (Step 212). Navigational databases for aircraft are typically replaced in their entirety or upgraded incrementally to a partially downloaded database. This embodiment applies to full data being downloaded and an increment being downloaded. The DLMU 150 may then optionally determine if a download threshold is exceeded before starting a download. (Step 214). As discussed in further detail below, the DLMU may also continuously monitor the download threshold after the download has been initiated. There are multiple factors which the DLMU may take into account when calculating a download threshold. In one embodiment, for example, the DLMU 150 may not continue connection if the signal characteristic is not above the threshold. In one embodiment, for example, the DLMU 150 may determine a speed of the connection between the DLMU 150 and database upgrade server 110. If, for example, the speed of the connection is below a predetermined threshold, the DLMU may delay the download. In another embodiment, for example, if the speed of the connection is below a predetermined threshold for more than a predetermined amount of time, the DLMU 150 could determine that the download threshold was not exceeded and either stop the download or stop an initialization of a download session. The DLMU 150 may also take into account a size of the pending download. For example, if the remaining download size is below a predetermined threshold, the DLMU 150 may initiate the download regardless of the speed of the connection. Conversely, if the size of the download is very large and above a predetermined threshold, the DLMU 150 may also initiate the download regardless of the speed of the connection. The DLMU 150 may also consider a combination of the speed of the connection and the size of the file before initiating the download. For example, in one embodiment the DLMU may determine an estimated time for the download to complete based upon the size of the file and the speed of the connection. Accordingly, in one embodiment, the DLMU 150 may only download the database update if a time to download the file is below a predetermined threshold.

The DLMU 150 may also take into account an age of the navigational database 170 or any other file that is to be updated. For example, in one embodiment the DLMU 150 may initiate a download of an update even if the speed, size and/or download times do not meet their respective predetermined threshold if the database 170 is out of date by more than a predetermined number of versions or if a time stamp associated with the database 170 is older than a predetermined amount. For example, in one embodiment, if the navigational database has missed more than two updates, the DLMU 150 may initiate a download of an update even if the speed, size and/or download times do not meet their respective predetermined threshold. In another embodiment, if the navigational database has missed more than a predetermined number of updates, the DLMU 150 could alter any of the download thresholds, for example any speed, size or time requirements, to make a download more likely. In another embodiment, for example, the DLMU 150 could lower the requirements for any speed, size and/or time thresholds based upon the number of updates missed or the age of the database 170 such that the older the database becomes, the lower the thresholds become.

The DLMU 150 may also take into account a cost associated with the download. In one embodiment, for example, the DLMU 150 may connect to a database upgrade server 110 over a cellular connection. Accordingly, there may be a cost associated with the download in minutes used on a cellular plan, a cost per minute and/or a cost per megabit or gigabit downloaded. The DLMU may weigh the cost associated with the download versus any combination of the connection speed, size of the download, download time and/or age of the database before initiating the download.

The DLMU 150 may also take into account how frequently a connection between the aircraft 130 and database upgrade server 110 is lost. As discussed above, if the connection between the aircraft 130 and database upgrade server 110 is lost at any point in the process, the DLMU 150 returns to Step 202 to attempt to reestablish a connection. In one embodiment, for example, the DLMU 150 keeps track of the number of times the connection has been lost. If the number of times the connection has been lost exceeds a predetermined number over a predetermined period, the DLMU 150 may cease attempts to download the database from the database upgrade server 110 for a predetermined period of time.

The DLMU 150 may also take into account a location of the aircraft 130 before initiating a download. In one embodiment, for example, if the aircraft 130 or other vehicle or device employs a cellular connection to connect to the database upgrade server 110, the DLMU may monitor the location of the aircraft to avoid international usage charges. In another embodiment, for example, the DLMU 150 may cease a download session when an aircraft on a runway.

In the context of the aircraft 130 downloading a navigational database, the DLMU 150 could take into consideration the flight plan of the aircraft 130 stored in the FMS 160. For example, if the flight plan indicates that the aircraft is scheduled to take off at a predetermined time, the DLMU 150 may determine a percentage of the download that could be completed before the predetermined time. If the percentage is above a predetermined threshold, for example 5%, the DLMU may proceed with the download. In another embodiment, for example, the DLMU 150 may determine a size of a download that could be completed before the predetermined time. In this embodiment, the DLMU 150 may initiate the download if the determined size exceeds a predetermined threshold. In another embodiment, for example, the DLMU 150 could monitor thresholds for both a minimum percentage of the download and the minimum size of the download that could be accomplished before the predetermined time.

As discussed above, the DLMU may take into account any combination of the download threshold factors discussed above. For example, if the DLMU 150 determined based upon data in the FMS 160 that the aircraft is going to take off in ten minutes and that only 3% of the download could be accomplished in that time, the DLMU 150 may still initiate the download, even if the typical threshold for initiating a download session is greater than 3%, if, for example, the database is almost completely download and can be completed before the aircraft is scheduled to take off.

If the DLMU 150 determines that the threshold for initiating a download session has not been exceeded, the DLMU 150 continues to monitor the download thresholds to determine if any conditions have been met while the connection between the aircraft 130 and database upgrade server 110 still exists. If the DLMU 150 determines that a threshold for initiating a download session has been met, the DLMU 150 sends a request to the database upgrade server 110 via the wireless transceiver 140 be begin the download session. (Step 216).

Once a download session has been initiated, the DLMU 150 monitors the state of the download. (Step 218). As discussed above, the connection between an aircraft 130, other vehicles or devices and the database upgrade server 110 may be intermittent. Accordingly, the state of the download is stored on the DLMU 150 so that, if the connection is interrupted, the download can be efficiently restarted. The state (size of downloaded file) is stored in the form of the file on the non-volatile storage on the DLMU 150. Upon interruption, the state stored on the file in the non-volatile storage is used as reference to resume the download. The DLMU 150, at Step 218, also determines if the database download is complete. If the database is not completely downloaded, the process returns to Step 214 where the DLMU 150 continues to monitor whether the download threshold has been met.

When the database download is complete, the DLMU 150 then validates the download. (Steps 220). In one embodiment, for example, the DLMU 150 may request a checksum from the database upgrade server 110. The DLMU 150 can then perform a checksum calculation on the download stored in the DLMU 150 to determine if the calculated checksum matches the checksum transmitted by the database upgrade server 110. (Step 222). In other embodiments the checksum maybe stored in the database. The downloaded database is validated against the checksum in the database. A hash file could also be downloaded along with the database. The checksum value in the hash file and the hash value of the database can be compared to check the integrity of the downloaded database and restart the download if the integrity check fails.

If the DLMU 150 can not validate the download, the DLMU 150 may delete the download stored in the local memory and return to Step 214 to restart the download. If the download is validated, the DLMU 150 replaces the old navigational database 170 with the downloaded database. (Step 226). In one embodiment, for example, the process 200 may end, only to be restarted each time the aircraft is turned on. (Step 228). In other embodiments, the DLMU 150 may restart the process 200 periodically to check for further updates. The frequency at which the DLMU checks for updates can vary depending upon the type of vehicle or device the DLMU 150

Generally speaking, the various functions and features of method 200 may be carried out with any sort of hardware, software and/or firmware logic that is stored and/or executed on any platform. Some or all of method 200 may be carried out, for example, by the DLMU 150 or the FMS 160 in FIG. 1. For example, various functions shown in FIG. 2 may be implemented using software or firmware logic. The particular hardware, software and/or firmware logic that implements any of the various functions shown in FIG. 2, however, may vary from context to context, implementation to implementation, and embodiment to embodiment in accordance with the various features, structures and environments set forth herein. The particular means used to implement each of the various functions shown in FIG. 2, then, could be any sort of processing structures that are capable of executing software and/or firmware logic in any format, and/or any sort of application-specific or general purpose hardware, including any sort of discrete and/or integrated circuitry.

The term "exemplary" is used herein to represent one example, instance or illustration that may have any number of alternates. Any implementation described herein as "exemplary" should not necessarily be construed as preferred or advantageous over other implementations.

Although several exemplary embodiments have been presented in the foregoing description, it should be appreciated that a vast number of alternate but equivalent variations exist, and the examples presented herein are not intended to limit the scope, applicability, or configuration of the invention in any way. To the contrary, various changes may be made in the function and arrangement of the various features described herein without departing from the scope of the claims and their legal equivalents.

## Claims

1. A computer implemented method for updating a database stored in a first memory by a data loader management unit having a memory, comprising:
determining if a partial database download is stored in the memory of the data loader management unit;
determining, if the partial database download is stored in the memory of the data loader management unit, if a version associated with the partial database download matches a most current version of the database stored on a database upgrade server;
initiating, if the version associated with the partial database download matches the most current version of the database stored on the database upgrade server, a first download session to resume the download of the most current version of the database from the database upgrade server; and
initiating, if the version associated with the partial database download does not match the most current version of the database stored on the database upgrade server, a second download session to begin downloading the most current version of the database from the database upgrade server.

2. The method of claim 1, further comprising:
determining, before initiating one of the first or second download sessions, if a download threshold has been exceeded; and
initiating the first or second download session when the download threshold has been exceeded.

3. The method of claim 2, further comprising stopping the first or second download session if the download threshold is below a predetermined threshold.

4. A system for updating a database stored in a first memory, comprising:
a communications system configured to communicate with a database upgrade server;
a data loader management unit, communicatively connected to the communications system, comprising:
a memory; and
a processor configured to:
determine if a partial database download is stored in the memory of the data loader management unit;
determine, if the partial database download is stored in the memory of the data loader management unit, if a version associated with the partial database download matches a most current version of the database stored on the database upgrade server; and
initiate, if the version associated with the partial database download matches the most current version of the database stored don the database upgrade server, a first download session to resume the download of the most current version of the database from the database upgrade server;
initiate, if the version associated with the partial database download does not match the most current version of the database store on the database upgrade server, a second download session to being downloading the most current version of the database from the database upgrade server.

5. The system of claim 4, wherein the processor is further configured to:
determine, before initiating a download session, if a download threshold has been exceeded; and
initiate the download session when the download threshold has been exceeded.

6. The system of claim 5, wherein the processor is further configured to: stop the download session if the download threshold is below the predetermined threshold.

7. The system of claim 6, wherein the processor is further configured to:
determine a flight plan of an aircraft; and
determine, based upon the flight plan of the aircraft, whether a predetermined percentage of the download can be completed during the download session before the aircraft is scheduled to take off.

8. The system of claim 6, wherein the processor is further configured to:
determine a cost associated with the download session; and
initiate the download session if the cost is below a predetermined amount.

9. The system of claim 6, wherein the processor is further configured to lower the download threshold based upon an age associated with the database stored in the first memory relative to the age of the most current database stored on the database upgrade server.

10. The system of claim 6, wherein the processor is further configured to:
determine an average download speed over a predetermined period of time; and
initiate the download session if the average download speed over the predetermined period of time is above the predetermined threshold.
